# FASCICULE DE BREVET EUROPEEN

(11) **EP 0 624 492 B1**
(45) Date de publication et mention de la délivrance du brevet: **05.03.1997**
(21) Numéro de dépôt: 94401067.7
(22) Date de dépôt: 11.05.1994
(51) Int. Cl.: B60Q 1/00

(54) **Dispositif de montage de deux dispositifs d'éclairage ou de signalisation de véhicule automobile**
Befestigungseinrichtung für zwei Beleuchtungs- oder Signalvorrichtungen eines Fahrzeuges
Mounting device for two lighting or signal devices for a motor vehicle

(30) Priorité: 12.05.1993 FR 9305705
(43) Date de publication de la demande: 17.11.1994
(73) Titulaire: VALEO VISION, 93000 Bobigny (FR)
(72) Inventeur: Donaire Camacho, Juan, E-23600 Martos (ES)
(74) Mandataire: Warcoin, Jacques

(56) Documents cités:
- FR-A- 2 620 090
- GB-A- 2 076 516
- GB-A- 2 093 174

## Description

La présente invention a trait d'une façon générale au montage des feux de signalisation, et plus particulièrement au montage d'un feu tel qu'un feu clignotant indicateur de direction contre un projecteur avant d'un véhicule automobile.

On connaît déjà un certain nombre de techniques pour monter un feu de façon accolée à un projecteur de telle manière que la position du feu puisse être ensuite ajustée notamment pour amener la surface extérieure de son voyant en affleurement avec la surface extérieure de la glace du projecteur et les parties de carrosserie avoisinante.

Notamment, le document FR-A-2 314 843 enseigne un dispositif de montage de ce type.

Une difficulté de ce type de montage avec degré de liberté réside cependant en ce qu'il est difficile d'y associer des moyens permettant de verrouiller effectivement le feu sur le projecteur. Ainsi, dans le document précité, le feu peut être aisément démonté du projecteur, même lorsque l'on n'a pas accès à l'espace intérieur du capot avant du véhicule.

Au contraire, d'autres dispositifs de montage permettent d'assurer un verrouillage du feu sur le projecteur, mais dans ce cas l'assemblage est généralement rigide, et l'on perd le degré de liberté précité, ce qui est désavantageux.

La présente invention vise à s'affranchir des limites de la technique antérieure et à proposer un dispositif de montage notamment d'un feu contre un projecteur de véhicule automobile, qui assure un verrouillage mutuel effectif, essentiellement inviolable, tout en permettant si nécessaire de conserver le degré de liberté précité.

Elle propose à cet effet un dispositif de montage d'un premier dispositif d'éclairage ou de signalisation de véhicule automobile sur un second dispositif d'éclairage ou de signalisation, caractérisé en ce qu'il comprend :
sur un boitier du premier dispositif, un aménagement comportant au moins une patte et, au dessous de ladite patte, un espace libre d'une première largeur, ladite patte portant une dent de verrouillage dirigée à l'opposé dudit espace libre, ladite patte et l'espace libre étant orientés selon une direction de montage du premier dispositif sur le second,
sur un boîtier du second dispositif, un logement ayant une deuxième largeur supérieure à ladite première largeur et sensiblement égale à la largeur hors-tout, englobant ladite patte et ledit espace libre, dudit aménagement, et délimité par deux parties généralement parallèles dudit boîtier dont l'une définit un bord d'arrêt apte à coopérer avec ladite dent,
également sur le boîtier du second dispositif, un bras articulé ayant une largeur sensiblement égale à ladite première largeur et apte à être sélectivement engagé dans ledit espace libre après engagement dudit aménagement dans ledit logement de manière à éviter la venue hors de prise de ladite dent avec ledit bord d'arrêt.

Des aspects préférés, mais non limitatifs, du dispositif de montage de la présente invention sont les suivants :
- ledit aménagement comprend un moyen pour sécuriser l'engagement dudit bras dans ledit espace libre.
- ledit moyen de sécurisation comprend un bossage formé sur une surface dudit aménagement tournée vers ledit espace libre.
- ledit bras est réalisé d'un seul tenant avec le boîtier du second dispositif d'éclairage ou de signalisation et est articulé sur ledit boîtier par une charnière film au voisinage dudit logement.
- ledit aménagement comprend une double patte en "U" en saillie latéralement à partir d'une face latérale dudit boîtier; dans ce cas, au moins l'une des pattes de la double patte en "U" est reliée à ladite face latérale seulement sur une partie de sa longueur opposée à une extrémité libre.
- ladite direction de montage est une direction généralement horizontale de l'extérieur vers l'intérieur, auquel cas ledit logement est orienté horizontalement et ouvert en direction du premier dispositif d'éclairage ou de signalisation de manière à ne pas faire obstacle à un certain pivotement dudit aménagement dans ledit logement après verrouillage, et donc du premier dispositif d'éclairage ou de signalisation par rapport au second, autour d'un axe essentiellement vertical.
- ledit bras est articulé de manière à tourner autour d'un axe essentiellement vertical.
- le dispositif comprend des moyens de montage additionnels autorisant également un certain pivotement du premier dispositif d'éclairage ou de signalisation par rapport au second, autour d'un axe essentiellement vertical; ces moyens de montage additionnels comprennent au moins une languette formée sur le boîtier de l'un des dispositifs d'éclairage ou de signalisation, orientée selon la direction de montage et apte à s'engager dans un passage formé dans le boîtier de l'autre dispositif d'éclairage ou de signalisation, la languette et le passage ayant sensiblement même hauteur mais la languette ayant une largeur horizontale inférieure à la largeur du passage.

L'invention concerne également un dispositif d'éclairage ou de signalisation pour véhicule automobile, caractérisé en ce que, pour réaliser un dispositif de montage tel que défini ci-dessus, il comprend sur un boîtier un aménagement comportant au moins une patte et, au-dessous de ladite patte, un espace libre d'une largeur prédéterminée, ladite patte portant une dent de verrouillage dirigée à l'opposé dudit espace libre, et en ce que ladite patte et ledit espace libre sont orientés selon une direction de montage du dispositif.

Enfin l'invention propose un dispositif d'éclairage ou de signalisation pour véhicule automobile, caractérisé en ce que, pour réaliser un dispositif de montage selon l'une des revendications précédentes, il comprend sur un boîtier un logement ayant une largeur prédéterminée et délimité par deux parties généralement parallèles dudit boîtier dont l'une définit un bord d'arrêt, et un bras mobile ayant une largeur sensiblement inférieure à ladite largeur prédéterminée et apte à être sélectivement positionné au droit dudit logement.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue de dessus partiellement en coupe horizontale du montage d'un feu de signalisation avant et d'un projecteur réalisé selon la présente invention,
la figure 2 est une vue en coupe selon la ligne II-II de la figure 1, et
la figure 3 est une vue de côté en perspective d'une partie du feu des figures 1 et 2, avant montage,
la figure 4 est une vue de côté en perspective d'une partie du boîtier du projecteur des figures 1 et 2, avant montage,
la figure 5 est une vue de l'arrière en perspective du feu et d'une partie du projecteur après montage, et
la figure 6 est une vue de dessous en perspective d'un détail du montage de la figure 5.

En référence maintenant aux dessins, on a représenté un projecteur P qui comprend un boîtier 10 fermé à l'avant par une glace de fermeture 20. Dans l'espace intérieur défini par le boîtier et la glace sont prévus de façon conventionnelle une lampe (non visible), un miroir 30 et un enjoliveur 40 assurant une continuité d'aspect entre le miroir et la glace.

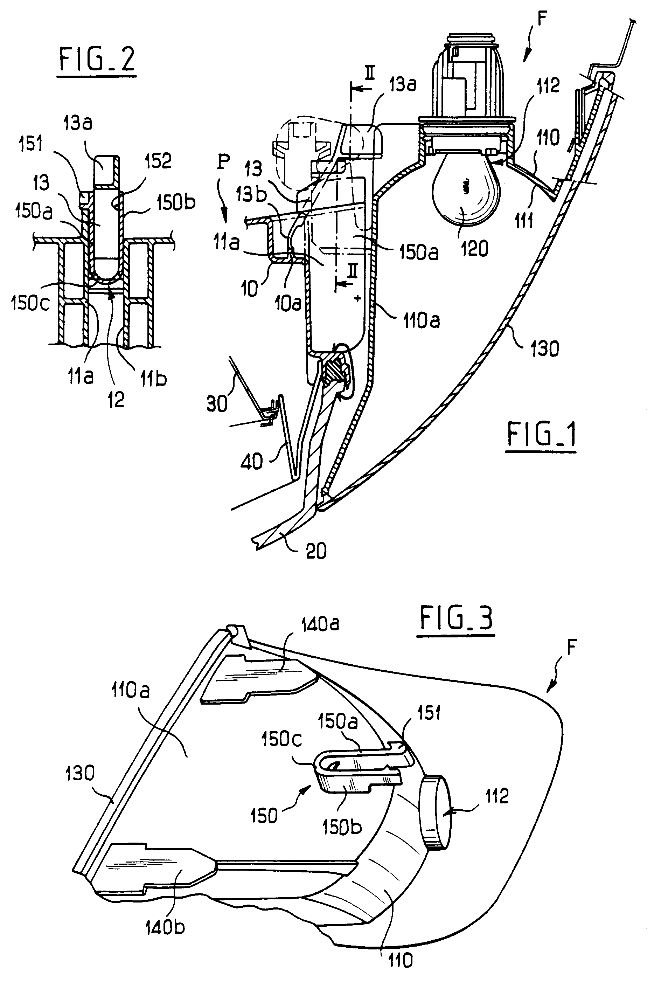

Le boîtier 10 comporte, sur un flanc latéral destiné à recevoir un feu de signalisation, des membrures 11a, 11b qui font saillie latéralement, qui s'étendent l'une au-dessus de l'autre et qui définissent entre elles un logement 12 qui s'étend généralement horizontalement et qui est ouvert vers l'avant et vers l'arrière. Comme on l'observe en particulier sur la figure 2, en direction de l'arrière du projecteur, la membrure 11a située au-dessus du logement 12 s'étend vers l'arrière (vers le haut sur la figure 2) plus loin que la membrure 11b située au-dessous de l'ouverture et définit un bord libre essentiellement rectiligne.

En outre, le boîtier 10 du projecteur comporte, au voisinage du logement 12 faisant saillie à partir d'une partie de paroi 10a tournée vers l'arrière, un bras 13 qui possède une largeur verticale essentiellement constante et prédéterminée et qui se termine à son extrémité libre par une partie de manoeuvre 13a.

Grâce à une région amincie 13b du bras 13, située à proximité de la partie de paroi 10a du boîtier et formant charnière film, ce bras peut pivoter dans un plan horizontal, et notamment occuper une première position où il laisse l'ouverture postérieure du logement 12 dégagée, et une seconde position où il vient se placer, d'une manière et dans un but que l'on décrira plus loin, dans l'alignement de ladite ouverture postérieure.

Par ailleurs, la région latérale du boîtier 10 du projecteur possède deux passages (non visibles) dont la hauteur est sensiblement plus grande que la largeur, qui sont orientés généralement d'avant en arrière et qui sont ouverts du côté de l'avant, prévus à des fins expliquées plus loin.

Ces deux passages sont prévus de préférence respectivement au-dessus du logement 12 et au-dessous du logement 12.

Un feu de signalisation F est destiné à être accolé latéralement au projecteur P. Ce feu comprend un socle 110 qui comporte un trou de lampe 112 et qui définit intérieurement un miroir 111, une lampe 120, et un voyant 130.

Le socle 110 présente, sur une paroi latérale 110a (à gauche sur la figure 1) tournée vers le projecteur, des aménagements destinés à coopérer avec les aménagements du boîtier 10 du projecteur tels que décrits ci-dessus pour un montage du feu sur le projecteur ayant les caractéristiques suivantes :
- le feu est monté sur le projecteur de façon sûre, sans risque de séparation accidentelle, et de façon indémontable lorsque le capot avant du véhicule est fermé,
- le feu est néanmoins capable de pivoter autour d'un axe vertical par rapport au projecteur, dans une certaine gamme angulaire (qui n'a pas besoin d'être très étendue), de manière à permettre, lors du montage du projecteur et du feu sur la carrosserie du véhicule, un ajustement de la position mutuelle du projecteur et du feu et notamment de la glace de l'un et du voyant de l'autre. L'axe de pivotement de ce mouvement d'ajustement est en l'espèce vertical.

Les premiers aménagements prévus comprennent deux languettes, respectivement 140a et 140b, qui sont prévues à une petite distance de la joue latérale 110a du socle 110 et s'étendent généralement d'avant en arrière, leur extrémité libre arrière étant effilée.

Ces languettes sont destinées, lors du montage du feu sur le projecteur par un mouvement général d'avant en arrière, à pénétrer dans les passages précités formés dans le boîtier du projecteur. Ces passages ayant sensiblement la même hauteur que les languettes 140a, 140b, on fixe de cette manière la position en hauteur du feu F par rapport au projecteur P. En revanche, l'épaisseur des languettes 140a et 140b est choisie quelque peu inférieure à la largeur des passages correspondants, de telle manière qu'un pivotement du feu dans une gamme angulaire étroite autour d'un axe généralement vertical passant au voisinage des deux languettes est rendu possible.

Un autre aménagement prévu sur le socle 110 du feu F consiste en une double patte 150 qui fait saillie latéralement vers l'extérieur par rapport à la joue latérale 110a, comme le montre bien la figure 3.

Cette double patte présente une section verticale en forme générale de "U" orienté horizontalement, et comporte une partie coudée avant 150c de liaison entre deux pattes rectilignes horizontales 150a, 150b, respectivement supérieure et inférieure, s'étendant vers l'arrière à partir de la partie coudée.

La double patte en "U" 150 n'est solidaire de la joue 110a que sur une partie de sa longueur, à l'avant, de telle sorte que les régions postérieures des pattes 150a, 150b peuvent se déformer élastiquement vers le haut et vers le bas, à des fins expliquées plus loin.

La distance verticale hors-tout entre les deux pattes 150a et 150b est sensiblement égale ou très légèrement inférieure à la hauteur du logement 12 formé dans le boîtier du projecteur. En outre, la distance verticale entre les faces tournées l'une vers l'autre des pattes 150a, 150b est sensiblement égale ou très légèrement supérieure à la largeur, mesurée verticalement, du bras articulé 13 formé sur le boîtier de projecteur.

La patte supérieure 150a de l'élément en "U" 150 comporte à son extrémité libre arrière une dent 151 en saillie vers le haut, dont une surface verticale rectiligne est destinée à coopérer dans une relation de verrouillage avec le bord d'extrémité libre de la membrure supérieure 11a du boîtier 10 de projecteur.

En outre, comme le montre en particulier la figure 2, la patte 150b comporte au voisinage de son extrémité postérieure libre un bossage 152 en saillie vers le haut en direction de la patte 150a.

Lors de la mise en place du feu d'avant en arrière comme décrit plus haut, la double patte 150 vient s'engager dans le logement 12 du boîtier 10 de projecteur. Au moins la patte supérieure 150a fléchit alors élastiquement vers le bas pour permettre le passage de la dent 151.

Lorsque la dent 151 ressort vers l'arrière du logement 12, ladite patte revient en position de repos et la dent 151 vient en prise avec le bord postérieur de la membrure 11a.

La position du feu en profondeur est alors fixée, tandis que le pivotement d'ajustement précité reste ultérieurement possible du fait que la double patte 150 est capable de pivoter autour de l'axe vertical d'ajustement précité dans son logement 12, qui est ouvert latéralement.

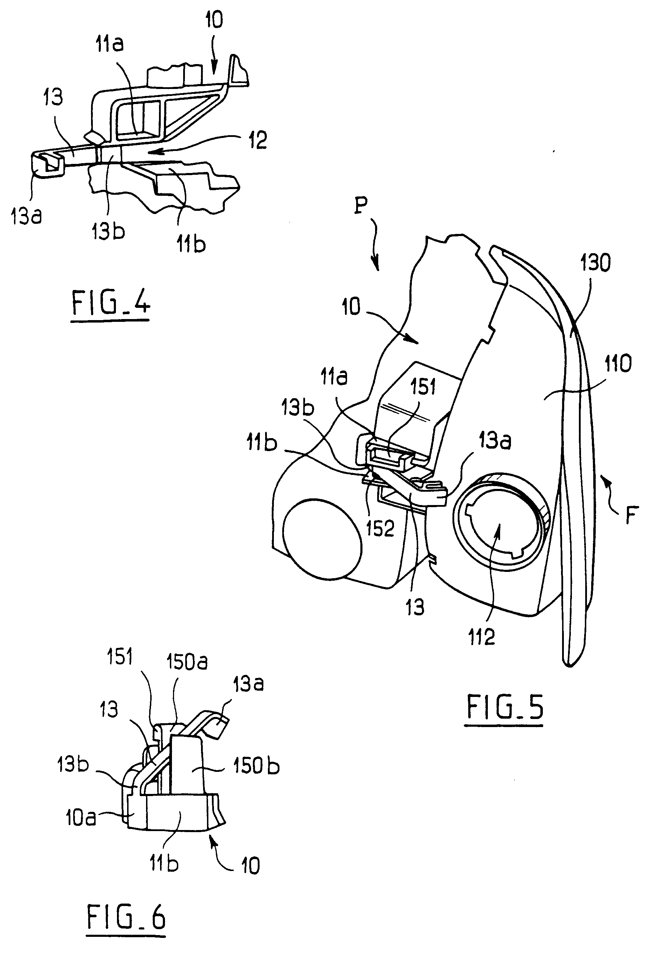

Pour terminer le montage du feu sur le projecteur, on fait pivoter le bras de verrouillage 13 du boîtier de projecteur à l'aide de sa partie de manoeuvre 13a pour l'engager entre les pattes 150a, 150b, comme illustré notamment sur les figures 5 et 6. Ce mouvement est poursuivi jusqu'à ce que le bras 13 franchisse à force le bossage 152 décrit plus haut, pour assurer que le bras conserve cette position d'engagement.

Dans cette position, le bras 13 empêche que la patte supérieure 150a de l'élément en "U" 150, qui porte la dent de verrouillage 151, ne puisse fléchir vers le bas, et l'on assure donc un verrouillage sûr du feu contre le projecteur. On observera qu'après ce verrouillage, le degré de liberté en rotation tel que mentionné plus haut est conservé, le bras 13 ne faisant pas obstacle à la rotation de l'élément en "U" 150 dans le logement 12.

On peut donc monter l'ensemble projecteur-feu sur la carrosserie du véhicule et effectuer l'ajustement nécessaire notamment pour obtenir un bon affleurement des surfaces extérieures de la glace 20 et du voyant 130 avec les régions avoisinantes de la carrosserie.

On notera par ailleurs que le démontage du feu F ne peut se faire qu'en extrayant le bras 13 de l'élément en "U" 150, ce qui ne peut se faire que par l'arrière, c'est-à-dire après avoir ouvert le capot avant du véhicule. Une bonne sécurité contre les démontages malveillants est donc assurée.

On notera pour terminer que, grâce à la présente invention, on peut s'affranchir de l'utilisation d'un ressort séparé ou analogue. En fait, le montage est autorisé par l'effet de ressort d'au moins la patte 150a, tandis que cet effet de ressort est supprimé lors de l'engagement du bras 13 entre les pattes.

## Revendications

1. Dispositif de montage d'un premier dispositif d'éclairage ou de signalisation de véhicule automobile sur un second dispositif d'éclairage ou de signalisation, caractérisé en ce qu'il comprend :
sur un boitier (110) du premier dispositif, un aménagement (150) comportant au moins une patte (150a) et, au dessous de ladite patte (150a), un espace libre d'une première largeur, ladite patte (150a) portant une dent de verrouillage (151) dirigée à l'opposé dudit espace libre, ladite patte (150a) et l'espace libre étant orientés selon une direction de montage du premier dispositif sur le second,
sur un boîtier (10) du second dispositif, un logement (12) ayant une deuxième largeur supérieure à ladite première largeur et sensiblement égale à la largeur hors-tout, englobant ladite patte (150a) et ledit espace libre, dudit aménagement (150), et délimité par deux parties (11a, 11b) généralement parallèles dudit boîtier dont l'une (11a) définit un bord d'arrêt apte à coopérer avec ladite dent (151),
également sur le boîtier (10) du second dispositif, un bras mobile (13) ayant une largeur sensiblement égale à ladite première largeur et apte à être sélectivement engagé dans ledit espace libre après engagement dudit aménagement (150) dans ledit logement (12) de manière à éviter la venue hors de prise de ladite dent (151) avec ledit bord d'arrêt (11a).

2. Dispositif selon la revendication 1, caractérisé en ce que ledit aménagement (150) comprend un moyen (152) pour sécuriser l'engagement dudit bras dans ledit espace libre.

3. Dispositif selon la revendication 2, caractérisé en ce que ledit moyen de sécurisation comprend un bossage (152) formé sur une surface dudit aménagement tournée vers ledit espace libre.

4. Dispositif selon l'une des revendications 1 à 3, caractérisé en ce que ledit bras (13) est réalisé d'un seul tenant avec le boîtier du second dispositif d'éclairage ou de signalisation et est articulé sur ledit boîtier par une charnière film (13b) au voisinage dudit logement (12).

5. Dispositif selon l'une des revendications 1 à 4, caractérisé en ce que ledit aménagement comprend une double patte en "U" (150) en saillie latéralement à partir d'une face latérale (110a) dudit boîtier.

6. Dispositif selon la revendication 5, caractérisé en ce qu'au moins l'une des pattes (150a, 150b) de la double patte en "U" est reliée à ladite face latérale (110a) seulement sur une partie de sa longueur opposée à une extrémité libre.

7. Dispositif selon l'une des revendications 1 à 6, caractérisé en ce que ladite direction de montage est une direction généralement horizontale de l'extérieur vers l'intérieur, et en ce que ledit logement (12) est orienté horizontalement et ouvert en direction du premier dispositif d'éclairage ou de signalisation de manière à ne pas faire obstacle à un certain pivotement dudit aménagement (150) dans ledit logement après verrouillage, et donc du premier dispositif d'éclairage ou de signalisation par rapport au second, autour d'un axe essentiellement vertical.

8. Dispositif selon la revendication 7, caractérisé en ce que ledit bras (13) est articulé de manière à tourner autour d'un axe essentiellement vertical.

9. Dispositif selon l'une des revendications 7 et 8, caractérisé en ce qu'il comprend des moyens de montage additionnels (140a, 140b) autorisant également un certain pivotement du premier dispositif d'éclairage ou de signalisation par rapport au second, autour d'un axe essentiellement vertical.

10. Dispositif selon la revendication 9, caractérisé en ce que ledits moyens de montage additionnels comprennent au moins une languette (140a, 140b) formée sur le boîtier (110) de l'un des dispositifs d'éclairage ou de signalisation, orientée selon la direction de montage et apte à s'engager dans un passage formé dans le boîtier de l'autre dispositif d'éclairage ou de signalisation, la languette et le passage ayant sensiblement même hauteur mais la languette ayant une largeur horizontale inférieure à la largeur du passage.

11. Dispositif d'éclairage ou de signalisation (F) pour véhicule automobile, caractérisé en ce que, pour réaliser un dispositif de montage selon l'une des revendications précédentes, il comprend sur un boîtier (110) un aménagement (150) comportant au moins une patte (150a) et, au-dessous de ladite patte (150a), un espace libre d'une largeur prédéterminée, ladite patte (150a) portant une dent de verrouillage (151) dirigée à l'opposé dudit espace libre, et en ce que ladite patte (150a) et ledit espace libre sont orientés selon une direction de montage du dispositif.

12. Dispositif selon la revendication 11, caractérisé en ce que ledit aménagement (150) comprend un organe de retenue (152) s'étendant dans ledit espace libre.

13. Dispositif selon la revendication 11 ou 12, caractérisé en ce que ledit aménagement comprend une double patte en "U" (150) en saillie latéralement à partir d'une face latérale (110a) dudit boîtier.

14. Dispositif selon la revendication 13, caractérisé en ce qu'au moins l'une des pattes (150a, 150b) de la double patte en "U" est reliée à ladite face latérale (110a) seulement sur une partie de sa longueur opposée à une extrémité libre.

15. Dispositif selon l'une des revendications 11 à 14, caractérisé en ce qu'il comprend en outre, sur son boîtier (110), au moins un organe de montage additionnel (140a, 140b) orienté selon la direction de montage dudit dispositif.

16. Dispositif d'éclairage ou de signalisation (P) pour véhicule automobile, caractérisé en ce que, pour réaliser un dispositif de montage selon l'une des revendications précédentes, il comprend sur un boîtier (10) un logement (12) ayant une largeur prédéterminée et délimité par deux parties (11a, 11b) généralement parallèles dudit boîtier dont l'une (11a) définit un bord d'arrêt, et un bras mobile (13) ayant une largeur sensiblement inférieure à ladite largeur prédéterminée et apte à être sélectivement positionné au droit dudit logement.

17. Dispositif selon la revendication 16, caractérisé en ce que ledit bras (13) est réalisé d'un seul tenant avec le boîtier et est articulé sur lui par une charnière film (13b) au voisinage dudit logement (12).

18. Dispositif selon la revendication 17, caractérisé en ce que ledit bras (13) est articulé de manière à tourner autour d'un axe essentiellement vertical.

19. Dispositif selon l'une des revendications 16 à 18, caractérisé en ce qu'il comprend en outre, sur son boîtier (10), au moins un organe de montage additionnel orienté selon une direction générale du logement (12).

## Claims

1. Device for mounting a first motor vehicle lighting or signaling device on a second lighting or signaling device, characterized in that it comprises:
on a casing (110) of the first device, a fitting (150) including at least one lug (150a) and, underneath the said lug (150a), a free space of a first width, the said lug (150a) carrying a locking tooth (151) directed in the opposite direction to the said free space, the said lug (150a) and the free space being oriented in a direction of mounting the first device on the second,
on a casing (10) of the second device, a housing (12) having a second width greater than the said first width and substantially equal to the overall width, encompassing the said lug (150a) and the said free space of the said fitting (150), and delimited by two parts (11a, 11b) parallel overall to the said casing, one (11a) of which defines a stop edge suitable for cooperating with the said tooth (151),
also on the casing (10) of the second device, a movable arm (13) having a width substantially equal to the said first width and suitable for being selectively engaged in the said free space after engagement of the said fitting (150) in the said housing (12) so as to prevent the said tooth (151) for coming out of engagement with the said stop edge (11a).

2. Device according to Claim 1, characterized in that the said fitting (150) comprises a means (152) for securing the engagement of the said arm in the said free space.

3. Device according to Claim 2, characterized in that the said securing means comprises a protrusion (152) formed on a surface of the said fitting turned towards the said free space.

4. Device according to one of Claims 1 to 3, characterized in that the said arm (13) is produced in one piece with the casing of the second lighting or signaling device and is hinged on the said casing by means of a film hinge (13b) in the vicinity of the said housing (12).

5. Device according to one of Claims 1 to 4, characterized in that the said fitting comprises a double U-shaped lug (150) projecting laterally from a lateral face (110a) of the said casing.

6. Device according to Claim 5, characterized in that at least one of the lugs (150a, 150b) of the double U-shaped lug is connected to the said lateral face (110a) solely on a part of its length opposite to a free end.

7. Device according to one of Claims 1 to 6, characterized in that the said mounting direction is a direction horizontal overall from the outside towards the inside, and in that the said housing (12) is oriented horizontally and open in the direction of the first lighting or signaling device so as not to cause an obstacle to a certain amount of pivoting of the said fitting (150) in the said housing after locking, and therefore of the first lighting or signalling device with respect to the second, about an essentially vertical axis.

8. Device according to Claim 7, characterized in that the said arm (13) is hinged so as to rotate about an essentially vertical axis.

9. Device according to one of Claims 7 and 8, characterized in that it comprises additional mounting means (140a, 140b) also allowing a certain amount of pivoting of the first lighting or signalling device with respect to the second, about an essentially vertical axis.

10. Device according to Claim 9, characterized in that the said additional mounting means comprise at least one tongue (140a, 140b) formed on the casing (110) of one of the lighting or signaling devices, oriented in the direction of mounting and suitable for engaging in a passage formed in the casing of the other lighting or signalling device, the tongue and the passage having substantially the same height but the tongue having a horizontal width less than the width of the passage.

11. Lighting or signalling device (F) for a motor vehicle, characterized in that, in order to produce a mounting device according to one of the preceding claims, it comprises, on a casing (110), a fitting (150) including at least one lug (150a) and, underneath the said lug (150a), a free space of predetermined width, the said lug (150a) carrying a locking tooth (151) directed in the opposite direction to the said free space, and in that the said lug (150a) and the said free space are oriented in a direction of mounting of the device.

12. Device according to Claim 11, characterized in that the said fitting (150) comprises a retaining member (152) extending in the said free space.

13. Device according to Claim 11 or 12, characterized in that the said fitting comprises a double U-shaped lug (150) projecting laterally from a lateral face (110a) of the said casing.

14. Device according to Claim 13, characterized in that at least one of the lugs (150a, 150b) of the double U-shaped lug is connected to the said lateral face (110a) solely on a part of its length opposite to a free end.

15. Device according to one of Claims 11 to 14, characterized in that it also comprises, on its casing (110), at least one additional mounting member (140a, 140b) oriented in the direction of mounting of the said device.

16. Lighting or signalling device (P) for a motor vehicle, characterized in that, in order to produce a mounting device according to one of the preceding claims, it comprises, on a casing (10), a housing (12) having a predetermined width and delimited by two roughly parallel parts (11a, 11b) of the said casing, one of which (11a) defines a stop edge, and a movable arm (13) having a width substantially less than the said predetermined width and suitable for being selectively positioned in line with the said housing.

17. Device according to Claim 16, characterized in that the said arm (13) is produced in one piece with the casing and is hinged on it by means of a film hinge (13b) in the vicinity of the said housing (12).

18. Device according to Claim 17, characterized in that the said arm (13) is hinged so as to rotate about an essentially vertical axis.

19. Device according to one of Claims 16 to 18, characterized in that it also comprises, on its casing (10), at least one additional mounting member oriented in an overall direction of the housing (12).

## Patentansprüche

1. Montagevorrichtung für den Einbau einer ersten Beleuchtungs- oder Signalvorrichtung eines Kraftfahrzeugs an einer zweiten Beleuchtungs- oder Signalvorrichtung, **dadurch gekennzeichnet**, daß sie die folgenden Bestandteile umfaßt:
an einem Gehäuse (110) der ersten Vorrichtung eine Anordnung (150) mit wenigstens einem Ansatz (150a) und mit einem unter dem besagten Ansatz (150a) befindlichen freien Zwischenraum mit einer ersten Breite, wobei der besagte Ansatz (150a) einen Verriegelungszahn (151) trägt, der entgegengesetzt zu dem besagten Zwischenraum gerichtet ist, und wobei der besagte Ansatz (150a) und der freie Zwischenraum in einer Montagerichtung für den Einbau der ersten an der zweiten Vorrichtung ausgerichtet sind,
an einem Gehäuse (10) der zweiten Vorrichtung eine Aufnahme (12) mit einer zweiten Breite, die größer als die erste Breite und in etwa gleich der Gesamtbreite der besagten Anordnung (150) unter Einschluß des besagten Ansatzes (150a) und des besagten freien Zwischenraums ist und die durch zwei allgemein parallele Teile (11a, 11b) des besagten Gehäuses begrenzt wird, von denen einer (11a) eine Anschlagkante bildet, die mit dem besagten Zahn (151) zusammenwirken kann,
ebenfalls am Gehäuse (10) der zweiten Vorrichtung einen beweglichen Arm (13), der eine Breite in etwa gleich der besagten ersten Breite hat und der nach dem Einsetzen der besagten Anordnung (150) in die besagte Aufnahme (12) wahlweise in den besagten freien Zwischenraum eingreifen kann, um die Ablösung des besagten Zahns (151) von der besagten Anschlagkante (11a) zu verhindern.

2. Vorrichtung nach Anspruch 1 , **dadurch gekennzeichnet,** daß die besagte Anordnung (150) ein Mittel (152) umfaßt, um den Eingriff des besagten Arms in dem besagten freien Zwischenraum zu sichern.

3. Vorrichtung nach Anspruch 2 , **dadurch gekennzeichnet,** daß das besagte Sicherungsmittel einen Vorsprung (152) umfaßt, der auf einer zu dem besagten freien Zwischenraum gerichteten Fläche der besagten Anordnung ausgebildet ist.

4. Vorrichtung nach einem der Ansprüche 1 bis 3, **dadurch gekennzeichnet,** daß der besagte Arm (13) einstückig mit dem Gehäuse der zweiten Beleuchtungs- oder Signalvorrichtung ausgeführt und an dem besagten Gehäuse durch ein Gelenkband (13b) in der Nähe der besagten Aufnahme (12) angelenkt ist.

5. Vorrichtung nach einem der Ansprüche 1 bis 4, **dadurch gekennzeichnet,** daß die besagte Anordnung einen "U"-förmigen Doppelansatz (150) umfaßt, der von einer Seitenfläche (110a) des besagten Gehäuses aus seitlich vorspringt.

6. Vorrichtung nach Anspruch 5 , **dadurch gekennzeichnet,** daß wenigstens einer der Ansätze (150a, 150b) des "U"-förmigen Doppelansatzes mit der besagten Seitenfläche (110a) nur auf einem Teil seiner Länge gegenüber einem freien Ende verbunden ist.

7. Vorrichtung nach einem der Ansprüche 1 bis 6, **dadurch gekennzeichnet,** daß die besagte Montagerichtung eine allgemein horizontale Richtung von außen nach innen ist und daß die besagte Aufnahme (12) horizontal ausgerichtet und in Richtung der ersten Beleuchtungs- oder Signalvorrichtung offen ist, um eine gewisse Schwenkbewegung der besagten Anordnung (150) in der besagten Aufnahme nach der Verriegelung und folglich der ersten Beleuchtungs- oder Signalvorrichtung im Verhältnis zur zweiten um eine in etwa vertikale Achse nicht zu behindern.

8. Vorrichtung nach Anspruch 7 , **dadurch gekennzeichnet,** daß der besagte Arm (13) so angelenkt ist, daß er sich um eine in etwa vertikale Achse dreht.

9. Vorrichtung nach einem der Ansprüche 7 und 8, **dadurch gekennzeichnet,** daß sie zusätzliche Montagemittel (140a, 140b) umfaßt, die ebenfalls eine gewisse Schwenkbewegung der ersten Beleuchtungs- oder Signalvorrichtung im Verhältnis zur zweiten um eine in etwa vertikale Achse ermöglichen.

10. Vorrichtung nach Anspruch 9, **dadurch gekennzeichnet**, daß die besagten zusätzlichen Montagemittel wenigstens eine am Gehäuse (110) einer der Beleuchtungs- oder Signalvorrichtungen ausgebildete Leiste (140a, 140b) umfassen, die in der Montagerichtung ausgerichtet ist und in einen Durchgang eingreifen kann, der in das Gehäuse der anderen Beleuchtungs- oder Signalvorrichtung eingearbeitet ist, wobei die Leiste und der Durchgang in etwa die gleiche Höhe haben, während die Leiste jedoch eine horizontale Breite aufweist, die kleiner als die Breite des Durchgangs ist.

11. Beleuchtungs- oder Signalvorrichtung (F) für Kraftfahrzeuge, **dadurch gekennzeichnet,** daß sie für die Ausführung einer Montagevorrichtung nach einem der vorangehenden Ansprüche an einem Gehäuse (110) eine Anordnung (150) mit wenigstens einem Ansatz (150a) und mit einem unter dem besagten Ansatz (150a) befindlichen freien Zwischenraum mit einer vorgegebenen Breite umfaßt, wobei der besagte Ansatz (150a) einen Verriegelungszahn (151) trägt, der entgegengesetzt zu dem besagten freien Zwischenraum gerichtet ist, und daß der besagte Ansatz (150a) und der besagte freie Zwischenraum in einer Montagerichtung für den Einbau der Vorrichtung ausgerichtet sind.

12. Vorrichtung nach Anspruch 11, **dadurch gekennzeichnet**, daß die besagte Anordnung (150) ein Halteorgan (152) umfaßt, das sich in dem besagten freien Zwischenraum erstreckt.

13. Vorrichtung nach Anspruch 11 oder 12 , **dadurch gekennzeichnet,** daß die besagte Anordnung einen "U"-förmigen Doppelansatz (150) umfaßt, der von einer Seitenfläche (110a) des besagten Gehäuses aus seitlich vorspring.

14. Vorrichtung nach Anspruch 13, **dadurch gekennzeichnet,** daß wenigstens einer der Ansätze (150a, 150b) des "U"-förmigen Doppelansatzes mit der besagten Seitenfläche (110a) nur auf einem Teil seiner Länge gegenüber einem freien Ende verbunden ist.

15. Vorrichtung nach einem der Ansprüche 11 bis 14, **dadurch gekennzeichnet**, daß sie außerdem an ihrem Gehäuse (110) wenigstens ein zusätzliches Montageorgan (140a, 140b) umfaßt, das in der Montagerichtung für den Einbau der besagten Vorrichtung ausgerichtet ist.

16. Beleuchtungs- oder Signalvorrichtung (P) für Kraftfahrzeuge, **dadurch gekennzeichnet,** daß sie zur Ausführung einer Montagevorrichtung nach einem der vorangehenden Ansprüche an einem Gehäuse (10) eine Aufnahme (12) umfaßt, die eine vorgegebene Breite hat und durch zwei allgemein parallele Teile (11a, 11b) des besagten Gehäuses begrenzt wird, von denen einer (11a) eine Anschlagkante bildet, und einen beweglichen Arm (13), dessen Breite deutlich kleiner als die besagte vorgegebene Breite ist und der wahlweise in Höhe der besagten Aufnahme positioniert werden kann.

17. Vorrichtung nach Anspruch 16, **dadurch gekennzeichnet,** daß der besagte Arm (13) einstückig mit dem Gehäuse ausgeführt und an diesem durch ein Gelenkband (13b) in der Nähe der besagten Aufnahme (12) angelenkt ist.

18. Vorrichtung nach Anspruch 17, **dadurch gekennzeichnet,** daß der besagte Arm (13) so angelenkt ist, daß er sich um eine in etwa vertikale Achse dreht.

19. Vorrichtung nach einem der Ansprüche 16 bis 18, **dadurch gekennzeichnet**, daß sie außerdem an ihrem Gehäuse (10) wenigstens ein zusätzliches Montageorgan umfaßt, das in einer allgemeinen Richtung der Aufnahme (12) ausgerichtet ist.
